# EUROPEAN PATENT APPLICATION

(11) **EP 4 375 913 A1**
(43) Date of publication of application: **29.05.2024**
(21) Application number: 23192360.8
(22) Date of filing: 21.08.2023
(51) Int. Cl.: G06Q 30/06, G06Q 20/20, G07G 1/00

(54) **TRANSACTION DEVICE AND INFORMATION PROCESSING METHOD**

(30) Priority: 24.11.2022 JP 2022187730
(71) Applicant: Toshiba Tec Kabushiki Kaisha, Shinagawa-ku Tokyo 141-8562 (JP)
(72) Inventor: Yasojima, Yoshito, Tokyo 141-8562 (JP)
(74) Representative: Hoffmann Eitle

(57) **Abstract**

According to an embodiment, a transaction processing device for batch transactions involving different product delivery modes includes a memory unit and a processor. The processor is configured to receive a designation of a product to be in a sales transaction via a registration screen, store the designation of the product as transaction data in the memory unit, receive a designation of a commodity delivery type via an input screen for the designated product, and generate a list of products in the stored transaction data of the memory unit with the products being distinguished by commodity delivery type.

## Description

### CROSS-REFERENCE TO RELATED APPLICATION

This application is based upon and claims the benefit of priority from Japanese Patent Application No. 2022-187730, filed November 24, 2022, the entire contents of which are incorporated herein by reference.

### FIELD

Embodiments described herein relate generally to a transaction device and an information processing method for handling sales transactions involving products with different delivery methods.

### BACKGROUND

In a setting such as a furniture store or the like, a sales transaction may be in the form of immediately providing an item presently in stock at the store to the customer or in the form of a later delivery of the purchased item from a warehouse or by a manufacturer order. For example, larger, bulky items are often sold in the latter manner.

These two forms of transactions are typically separately processed.

However, it would be desirable to be able to process a batch transaction in which both items for immediate delivery and items for a later delivery are mixed.

### SUMMARY OF THE INVENTION

One of the objects of the present invention is to improve prior art techniques and overcome at least some of the prior art problems as for instance above illustrated.

According to the first aspect of the invention, it is provided a transaction processing device for batch transactions involving different product delivery modes, the device comprising a memory unit; and a processor configured to receive a designation of a product to be in a sales transaction via a registration screen; store the designation of the product as transaction data in the memory unit; receive a designation of a commodity delivery type via an input screen for the designated product; and generate a list of products in the stored transaction data of the memory unit with the products being distinguished by commodity delivery type.

Optionally, the transaction processing device according to the first aspect of the invention further comprises a display screen, wherein the generated list is displayed on the display screen.

Optionally, the transaction processing device according to the first aspect of the invention further comprises a touch panel, wherein the registration screen and the input screen are displayed on the touch panel.

Optionally, in the transaction processing device according to the first aspect of the invention, the generated list is displayed on the touch panel.

Optionally, in the transaction processing device according to the first aspect of the invention, the commodity delivery types include immediate delivery, delivery from stock, and delivery by order.

Optionally, in the transaction processing device according to the first aspect of the invention, the processor is configured to receive a delivery date input via the input screen for the designated product and store the delivery date input in the transaction data in association with the designated product.

Optionally, in the transaction processing device according to the first aspect of the invention, the processor is configured to populate fields for the delivery date input on the input screen with a predetermined delivery date.

Optionally, in the transaction processing device according to the first aspect of the invention, the generated list includes the delivery date input for the products.

Optionally, in the transaction processing device according to the first aspect of the invention, the processor is further configured to update the list each time a designation of another product is received via the registration screen but only after receiving a designation of a commodity delivery type via the input screen for the other product.

Optionally, in the transaction processing device according to the first aspect of the invention, the processor is further configured to update the list according to a change instruction received via an edit screen for the designated product, the change instruction changing the commodity delivery type for the designated product.

According to a second aspect of the invention, it is provided a non-transitory, computer-readable medium storing program instructions which when executed by a transaction processing device causes the device to perform a method comprising receiving a designation of a product to be in a sales transaction via a registration screen; storing the designation of the product as transaction data in a memory unit; receiving a designation of a commodity delivery type via an input screen for the designated product; and generating a list of products in the stored transaction data of the memory unit with the products being distinguished by commodity delivery type.

Optionally, in the non-transitory, computer-readable medium according to the second aspect of the invention, the generated list is displayed on a display screen.

Optionally, in the non-transitory, computer-readable medium according to the second aspect of the invention, the registration screen and the input screen are displayed on a touch panel display.

Optionally, in the non-transitory, computer-readable medium according to the second aspect of the invention, the generated list is displayed on the touch panel display.

Optionally, in the non-transitory, computer-readable medium according to the second aspect of the invention, the commodity delivery types include immediate delivery, delivery from stock, and delivery by order.

Optionally, the non-transitory, computer-readable medium according to the second aspect of the invention further comprises the method further comprising receiving a delivery date input via the input screen for the designated product and storing the delivery date input in the transaction data in association with the designated product.

Optionally, the non-transitory, computer-readable medium according to the second aspect of the invention further comprises populating fields for the delivery date input on the input screen with a predetermined delivery date.

Optionally, in the non-transitory, computer-readable medium according to the second aspect of the invention, the generated list includes the delivery date input for the products.

Optionally, the non-transitory, computer-readable medium according to the second aspect of the invention further comprises the method further comprising updating the list each time a designation of another product is received via the registration screen but only after receiving a designation of a commodity delivery type via the input screen for the other product.

Optionally, the non-transitory, computer-readable medium according to the second aspect of the invention further comprises updating the list according to a change instruction received via an edit screen for the designated product, the change instruction changing the commodity delivery type for the designated product.

### BRIEF DESCRIPTION OF THE DRAWINGS

FIG. 1 is a block diagram of a transaction device according to an embodiment.
FIG. 2 is a diagram schematically showing transaction data.
FIGs. 3 to 5 are flowcharts of transaction processing.
FIGs. 6 to 9 show examples of a registration screen.
FIG. 10 is a diagram showing an example of an edit screen.
FIG. 11 is a diagram showing an example of an edit screen.
FIG. 12 is a diagram showing another example of a registration screen.
FIG. 13 is a diagram showing an example of an input screen.
FIG. 14 is a diagram showing an example of a receipt.

### DETAILED DESCRIPTION

In general, according to one embodiment, a transaction processing device for batch transactions involving different product delivery modes includes a memory unit and a processor. The processor is configured to receive a designation of a product to be in a sales transaction via a registration screen, store the designation of the product as transaction data in the memory unit, receive a designation of a commodity delivery type via an input screen for the designated product, and generate a list of products in the stored transaction data of the memory unit with the products being distinguished by commodity delivery type.

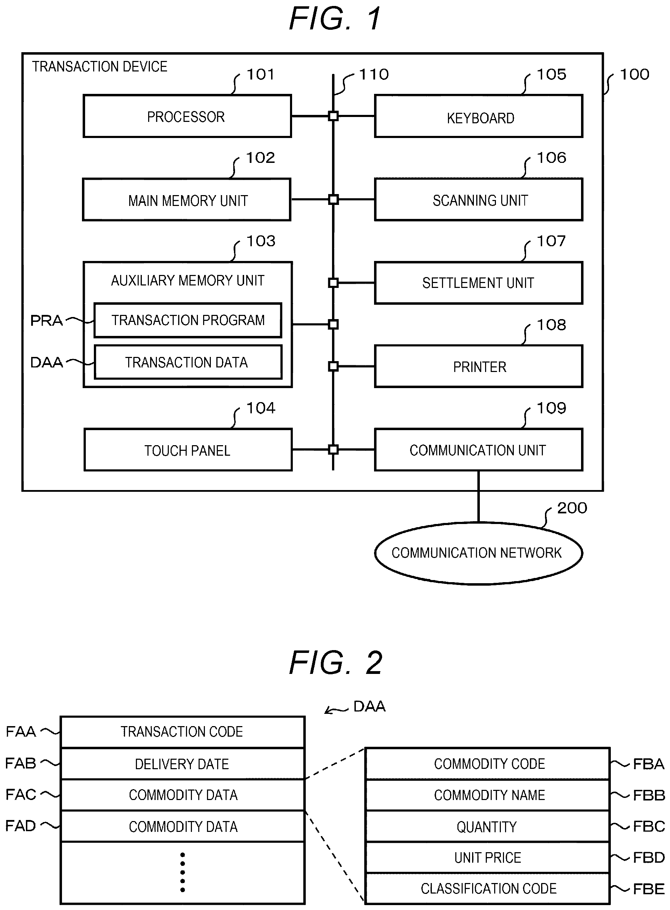

FIG. 1 is a block diagram showing a configuration of a transaction device 100 according to the present embodiment.

The transaction device 100 (transaction processing device) is used by an operator (e.g., a sales clerk) to sell a commodity (item) to a customer in a store.

The transaction device 100 includes a processor 101, a main memory unit 102, an auxiliary memory unit 103, a touch panel 104, a keyboard 105, a scanning unit 106, a settlement unit 107, a printer 108, a communication unit 109, and a transmission path 110. The processor 101, the main memory unit 102, the auxiliary memory unit 103, the touch panel 104, the keyboard 105, the scanning unit 106, the settlement unit 107, the printer 108, and the communication unit 109 are coupled to the transmission path 110.

The processor 101, the main memory unit 102, and the auxiliary memory unit 103 are coupled by the transmission path 110 to form a computer for executing information processing related to control of the transaction device 100.

The processor 101 corresponds to a central part of a computer (e.g., a CPU). The processor 101 controls each unit of the transaction device 100 to implement various functions of the transaction device 100 by executing an information processing program such as an operating system, middleware, and/or an application program stored in the main memory unit 102 and the auxiliary memory unit 103.

The main memory unit 102 includes a read-only memory area and a rewritable memory area. The main memory unit 102 stores a part of the information processing program in the read-only memory area. The main memory unit 102 may store data necessary for the processor 101 to execute processing for controlling each unit in the read-only memory area or the rewritable memory area. The main memory unit 102 uses the rewritable memory area as a work area for the processor 101.

The auxiliary memory unit 103 includes a known memory device such as an electric erasable programmable read-only memory (EEPROM), a hard disc drive (HDD), and a solid-state drive (SSD). The auxiliary memory unit 103 stores data used by the processor 101 executing various types of information processing and data generated by the processor 101. The auxiliary memory unit 103 may store an information processing program described above. In the present embodiment, the auxiliary memory unit 103 stores a transaction program PRA. The transaction program PRA is an application program describing a processing procedure related to information processing for processing a transaction according to an embodiment. A part of a memory area of the auxiliary memory unit 103 is used as an area for storing the transaction data DAA. The transaction data DAA is data representing the content of one transaction.

The touch panel 104 displays a screen that presents information to an operator. The touch panel 104 inputs an instruction based on a touch operation on the screen by the operator.

The keyboard 105 includes a plurality of keys which can be pressed by an operator to input instructions or information.

The scanning unit 106 scans a commodity code. The scanning unit 106 includes at least one of various scanning devices such as various types of bar code scanners (such as a handy (handheld) type bar code scanner or a fixed type bar code scanner) or an RFID-type scanner.

The settlement unit 107 executes processing for settlement (payment) of transaction prices. The settlement unit 107 may include one or more devices corresponding to various possible settlement methods such as cash settlement, credit settlement, electronic money settlement, code settlement, prepaid card settlement, points settlement, and debit card settlement.

The printer 108 prints an image of a voucher such as a receipt or a sales slip on receipt paper. The printer 108 discharges the receipt paper on which an image has been printed from a receipt discharge port.

The communication unit 109 performs communication for the processor 101 to exchange various kinds of data with any device such as a POS server via a communication network 200. A local area network (LAN) is typically used as the communication network 200. However, as the communication network 200, in addition to the LAN, the Internet, a virtual private network (VPN), a public communication network, a mobile communication network, and the like can be used alone or in combination as appropriate. As the communication unit 109, any device conforming to an appropriate communication method/protocol for the communication network 200 can be used.

The transmission path 110 includes an address bus, a data bus, a control signal line, and the like. The transmission path 110 transmits data and signals exchanged between the coupled units.

As basic hardware of the transaction device 100, hardware of a standard POS terminal device can be used. Typically, the transaction device 100 is generally transferred with the transaction program PRA already stored in the auxiliary memory unit 103. However, the hardware of transaction device 100 and the transaction program PRA may be separately transferred. The transaction program PRA may be later written in the auxiliary memory unit 103 by any operator. In some examples, a different version of a program type similar in various aspect to transaction program PRA may be stored in the auxiliary memory unit 103 of a transaction device 100. The transaction program PRA may be written to the auxiliary memory unit 103 by replacing, updating, upgrading, or modifying the information processing program already stored in the auxiliary memory unit 103. The transaction program PRA can be transferred by being recorded on a removable recording medium such as a magnetic disk, a magneto-optical disk, an optical disk, or a semiconductor memory, or by communication via a network. The transaction program PRA may be stored in the main memory unit 102 in some examples.

FIG. 2 is a diagram schematically showing a configuration of transaction data DAA.

The transaction data DAA is generated for each transaction in processing executed by the transaction device 100 and is stored in the auxiliary memory unit 103.

The transaction data DAA includes fields FAA and FAB. The transaction data DAA may include any number of fields after field FAC. A transaction code serving as an identifier of a particular transaction is set in the field FAA. In the field FAB, if a delivery date of a pre-order commodity is designated, the delivery date is set. The field FAB is, for example, in a null state if the delivery date is not yet designated. If there is a registered commodity serving as a transaction target (hereinafter, referred to as a transaction commodity), a field FAC, FAD, or the like associated with each transaction commodity can be added to the transaction data DAA. In the fields FAC, FAD, and the like, commodity data related to different transaction commodities is set.

Each piece of commodity data includes fields FBA, FBB, FBC, FBD, and FBE. In the field FBA, a commodity code is set as an identifier of an associated transaction commodity. In the field FBB, a commodity name determined for the associated transaction commodity is set. In the field FBC, quantity of the associated transaction commodities is set. In the field FBD, a unit price of the associated transaction commodities is set. In the field FBE, a classification code representing a classification related to a delivery method for the associated transaction commodity (hereinafter, referred to as a delivery classification) is set. The commodity data may include various types of other information such as discount information. In this way, the transaction data is data representing a list of transaction commodities, that is, a list of the items being purchased in the sales transaction.

Next, an operation of the transaction device 100 implemented as described above will be described. Contents of various kinds of processing to be described below are merely an example, and it is possible to appropriately change an order of some processing, omit some processing, add other processing, and the like. For example, in the following description, for easy understanding of a characteristic operation according to the present embodiment, the description certain possible aspects of the processing may be omitted. For example, if an error occurs, processing for coping with the error may be executed in an implementation, but the specific description for such processing may be omitted here.

If an instruction to start processing related to a transaction is given by a predetermined operation on the touch panel 104 or the keyboard 105, the processor 101 starts information processing (based on the transaction program PRA.

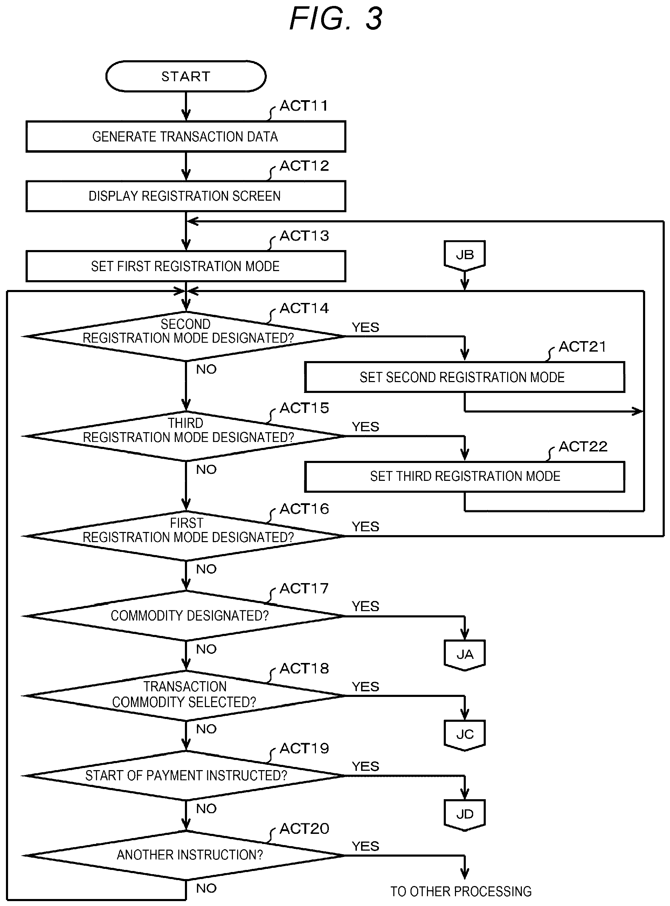

FIGS. 3 to 5 are flowcharts of a transaction (that is, transaction processing by transaction processing apparatus 100) .

As ACT 11, the processor 101 generates new transaction data related to a transaction to be processed. That is, for example, the processor 101 sets a new transaction code different from any transaction code already assigned to another transaction according to a predetermined rule, puts the transaction code in the field FAA, sets the field FAB to a null state, generates transaction data DAA which does not include any commodity data after the field FAC, and stores the transaction data DAA in the auxiliary memory unit 103. If the transaction data DAA generated for a transaction executed in the past is already stored in the auxiliary memory unit 103, the processor 101 leaves that transaction data DAA in the auxiliary memory unit 103 as it is.

As ACT 12, the processor 101 displays a registration screen on the touch panel 104. The registration screen is a graphical user interface (GUI) screen that displays a registration status of the transaction commodity and receiving operations for various instructions for the transaction device 100.

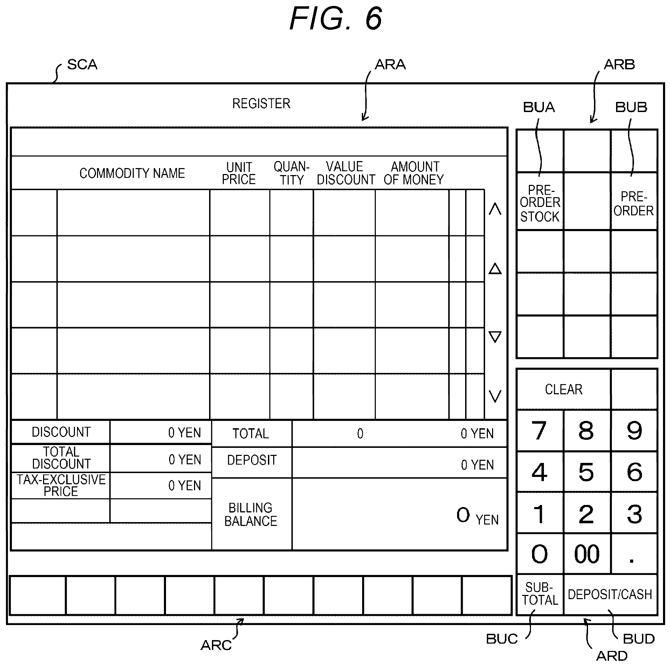

FIG. 6 is a diagram showing an example of a registration screen SCA.

FIG. 6 shows the registration screen SCA as displayed by processing by the processor 101 in ACT 12. That is, FIG. 6 shows the registration screen SCA in a state in which no transaction commodity has yet been registered.

The registration screen SCA and the various other depicted screens in the following show main display objects relevant to the description of the present embodiments but such screens are not limited to specific objects depicted. For example, some of the buttons that might be included on various screens, or text, character strings or marks related to other possible functions are not necessary shown in these examples. The registration screen SCA and the subsequent screens to be described are merely examples and may be appropriately varied by a developer, user, or operator of the transaction program PRA.

The registration screen SCA includes areas ARA, ARB, ARC, and ARD. The area ARA represents a registration status of the transaction commodity. Since a status is that no transaction commodity is registered, the registration screen SCA shown in FIG. 6 does not show information related to the transaction commodity in the area ARA. The areas ARB, ARC, and ARD show a plurality of buttons which are soft keys. Buttons BUA and BUB shown in the area ARB receive an instruction to switch between a first registration mode, a second registration mode, and a third registration mode. In the area ARC, a numeric keypad and buttons BUG and BUD are shown. The button BUC receives an instruction to end the registration of the transaction commodity and shift to payment. The button BUD receives an instruction to end the payment and end the transaction.

After displaying the registration screen SCA in ACT 12, the processor 101 proceeds to ACT 13.

As ACT 13 in FIG. 3, the processor 101 sets the first registration mode.

As ACT 14, the processor 101 checks whether the second registration mode is designated. The processor 101 determines NO if not, and proceeds to ACT 15.

As ACT 15, the processor 101 checks whether the third registration mode is designated. The processor 101 determines NO if not, and proceeds to ACT 16.

As ACT 16, the processor 101 checks whether the first registration mode is designated. The processor 101 determines NO if not, and proceeds to ACT 17.

As ACT 17, the processor 101 checks whether a commodity is designated. The processor 101 determines NO if not, and proceeds to ACT 18.

As ACT 18, the processor 101 checks whether one of registered transaction commodities is selected. The processor 101 determines NO if not, and proceeds to ACT 19.

As ACT 19, the processor 101 checks whether start of payment is instructed. The processor 101 determines NO if not, and proceeds to ACT 20.

As ACT 20, the processor 101 checks whether another instruction is given. The processor 101 determines NO if not, and proceeds to ACT 14.

Thus, the processor 101 waits for some designation or instruction to be made by the operator as ACT 14 to ACT 20.

Here, the first registration mode is a mode for registering a transaction commodity to be delivered to a customer immediately after the payment is completed. The first registration mode is applied when, for example, a stock commodity in a store where the transaction device 100 is used is registered as the transaction commodity.

The second registration mode and the third registration mode are modes for registering a transaction commodity which is not delivered immediately after the completion of the payment, but is delivered to the customer later.

The second registration mode is a mode for registering a commodity already purchased by a store operator, that is, a seller related to the transaction as a transaction commodity. For example, it is assumed that the second registration mode is applied when a commodity stored in a warehouse at a place different from the store where the transaction device 100 is used is registered as the transaction commodity. For example, it is assumed that the second registration mode is applied when a commodity is registered as the transaction commodity. The commodity is a stock commodity in a store where the transaction device 100 is used, but is delivered to a customer by delivery.

The third registration mode is a mode for registering, as the transaction commodity, a commodity to be delivered after receiving an order from, for example, a wholesaler, which is different from the store operator.

The operator designates the second registration mode or the third registration mode if the transaction commodity to be registered thereafter is to be delivered to the customer at a later time. For example, the operator checks a stock status of the commodity to be registered as the transaction commodity by any method, or determines whether the commodity is immediately delivered to the customer (hereinafter, referred to as normal delivery), the commodity is delivered to the customer among stock commodities (hereinafter, referred to as delivery in stock), or the commodity is delivered to the customer after being purchased through an order (hereinafter, referred to as delivery on order) in consideration of a request of the customer. If the operator intends to register a transaction commodity as a delivery in stock while in the first registration mode or the third registration mode, the operator designates the second registration mode by a predetermined operation such as tapping the button BUA in the registration screen SCA. If the operator intends to register a transaction commodity as a delivery on order while the first registration mode or the second registration mode is set, the operator designates the third registration mode by a predetermined operation such as tapping the button BUB in the registration screen SCA.

The processor 101 determines YES in ACT 14 if the operation of designating the second registration mode has been executed, and proceeds to ACT 21.

As ACT 21, the processor 101 sets the second registration mode. Then, the processor 101 returns to a standby state of ACT 14 to ACT 20.

The processor 101 determines YES in ACT 15 if the operation of designating the third registration mode has been executed, and proceeds to ACT 22.

As ACT 22, the processor 101 sets the third registration mode. Then, the processor 101 returns to a standby state of ACT 14 to ACT 20.

If the operator intends to register a transaction commodity as the normal delivery in a status in which the second registration mode is set, the operator designates the first registration mode by a predetermined operation such as tapping the button BUA in the registration screen SCA. If the operator intends to register a transaction commodity as the normal delivery in a status in which the third registration mode is set, the operator designates the first registration mode by a predetermined operation such as tapping the button BUB in the registration screen SCA.

If the operation of designating the first registration mode has been executed, the processor 101 determines YES in ACT 16, resets the first registration mode in ACT 13, and returns to the standby state of ACT 14 to ACT 20.

Thus, the operator can appropriately set any one of the first to third registration modes before designating the commodity to be registered as a transaction commodity. The operator designates a commodity to be registered while an appropriate registration mode is set. To designate a commodity, the operator may cause the scanning unit 106 to scan a bar code representing a commodity code of a commodity to be registered as a transaction commodity, tap a preset button displayed on the touch panel 104 for the commodity to be registered, press a key associated with the commodity to be registered among keys on the keyboard 105, or directly inputs a numerical value string corresponding to the commodity code via the touch panel 104 or the keyboard 105.

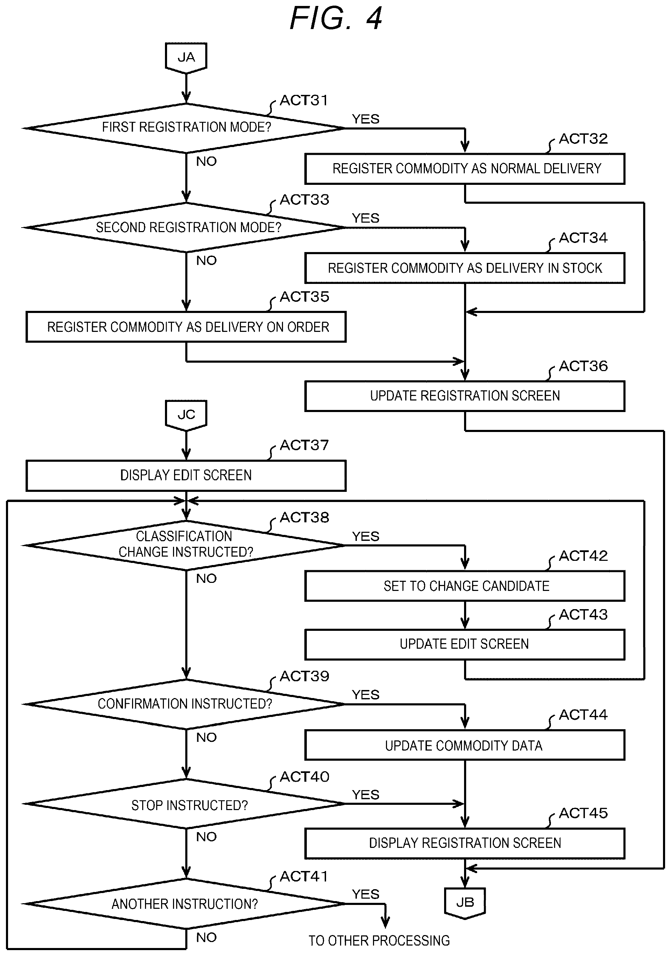

Once a commodity is designated, the processor 101 determines YES in ACT 17 and proceeds to ACT 31 in FIG. 4.

As ACT 31, the processor 101 checks whether the first registration mode is set. The processor 101 determines YES if the first registration mode is set, and proceeds to ACT 32.

As ACT 32, the processor 101 registers the designated commodity as a transaction commodity as normal delivery. For example, the processor 101 generates new commodity data in which a commodity code of the designated commodity is set in the field FBA, a commodity name predetermined for the designated commodity is set in the field FBB, "1" is set in the field FBC, a unit price predetermined for the designated commodity is set in the field FBD, and a classification code representing normal delivery is set in the field FBE. The processor 101 adds a new field after the field at the end of the transaction data DAA generated in ACT 11, and sets the commodity data in the field. The processor 101 extracts the commodity name and the unit price from, for example, commodity master data stored in the auxiliary memory unit 103 in advance or acquires the commodity name and the unit price via the communication network 200 from a server or the like for managing the commodity master data. The processor 101 may receive designation of quantity before and after receiving the designation of the commodity and set the designated quantity in the field FBC.

The processor 101 determines NO in ACT 31 if the first registration mode is not set, and proceeds to ACT 33.

As ACT 33, the processor 101 checks whether the second registration mode is set. The processor 101 determines YES if the second registration mode is set, and proceeds to ACT 34.

As ACT 34, the processor 101 registers the designated commodity as a transaction commodity as delivery in stock. For example, the processor 101 generates commodity data in a similar manner as in ACT 21 and adds the commodity data to the transaction data DAA. The processor 101 here sets the classification code representing delivery in stock in the field FBE.

The processor 101 determines NO in ACT 33 if the second registration mode is not set, and proceeds to ACT 35.

As ACT 35, the processor 101 registers the designated commodity as the transaction commodity as delivery on order. For example, the processor 101 generates commodity data in a similar manner as in ACT 21 and adds the commodity data to the transaction data DAA. The processor 101 here sets the classification code representing delivery on order in the field FBE.

As described above, the processor 101 determines the designated commodity as the transaction commodity which is the transaction target. Thus, the processor 101 executes the transaction program PRA, so that a computer including the processor 101 functions as a determination unit. The processor 101 sets the transaction commodity determined if the second registration mode or the third registration mode is set as a target for later delivery. That is, the processor 101 receives an instruction to set the second registration mode or the third registration mode as an instruction to deliver the commodity later. Thus, the processor 101 executes the transaction program PRA, so that a computer including the processor 101 functions as a reception unit. Further, the processor 101 generates the transaction data DAA including the commodity data including the classification code, thereby generating a list of transaction commodities such that the transaction commodities for which an instruction for later delivery has been received can be distinguished. Thus, the processor 101 executes the transaction program PRA, so that a computer including the processor 101 as a generation unit.

Once the registration of the transaction commodity is completed in ACT 32, ACT 34, or ACT 35, the processor 101 proceeds to ACT 36.

As ACT 36, the processor 101 updates the registration screen SCA so as to represent contents of the transaction data DAA updated in ACT 32, ACT 34, or ACT 35. Then, the processor 101 returns to the standby state of ACT 14 to ACT 20 in FIG. 3.

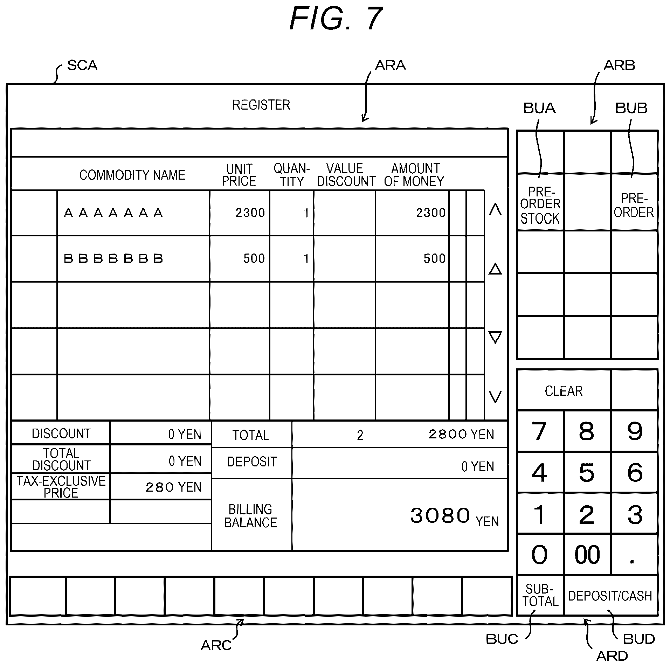

FIG. 7 is a diagram showing an example of the updated registration screen SCA.

The registration screen SCA shown in FIG. 7 is an example in which a commodity having a commodity name "AAAAAAA" and a commodity having a commodity name "BBBBBBB" are set as the transaction commodity one by one, both of which are updated after being registered as normal delivery. Therefore, in the area ARA, information related to the two transaction commodities is shown.

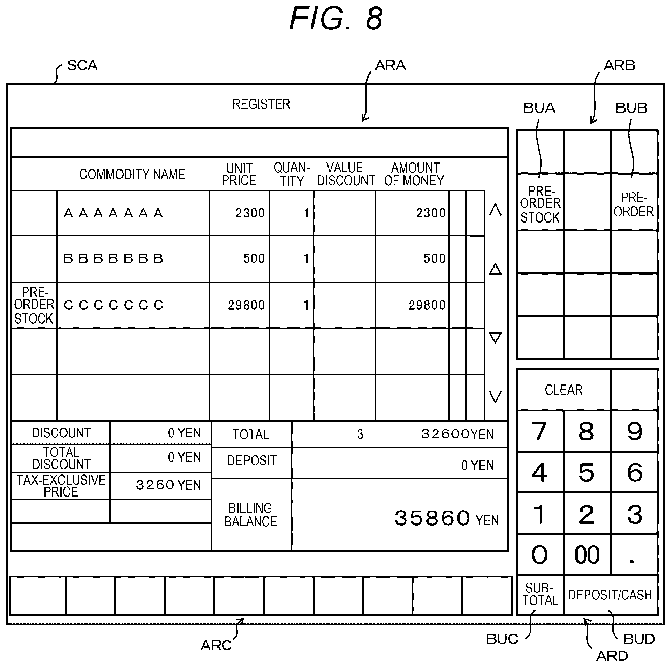

FIG. 8 is a diagram showing an example of the updated registration screen SCA.

The registration screen SCA shown in FIG. 8 is an example in which the registration screen SCA shown in FIG. 7 is displayed on the touch panel 104 and is updated after one commodity having a commodity name "CCCCCCC" is registered as delivery in stock. Therefore, in the area ARA, information related to the commodity having the commodity name "CCCCCCC" is additionally shown. A character string "pre-order stock" for representing that an item is registered as delivery in stock is represented in association with the commodity having the commodity name "CCCCCCC".

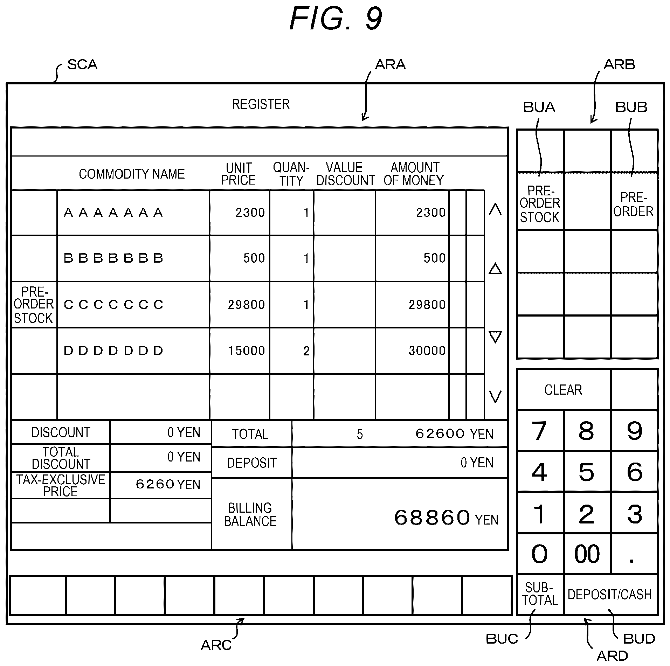

FIG. 9 is a diagram showing an example of the updated registration screen SCA.

The registration screen SCA shown in FIG. 9 is an example in which the registration screen SCA shown in FIG. 8 is displayed on the touch panel 104 and is updated after one commodity having a commodity name "DDDDDDD" is registered as normal delivery. Therefore, in the area ARA, information related to the commodity having the commodity name "DDDDDDD" is additionally shown.

When an operator wants to change something related to the registered transaction commodity, the operator selects one of the transaction commodities by a predetermined operation such as tapping an area in which information related to the transaction commodity is shown on the registration screen SCA. When such an operation occurs, the processor 101 determines YES in ACT 18 in FIG. 3 and proceeds to ACT 37 in FIG. 4.

As ACT 37, the processor 101 displays an edit screen on the touch panel 104. The edit screen is a GUI screen that can receive an instruction to change various settings related to the registered transaction commodity.

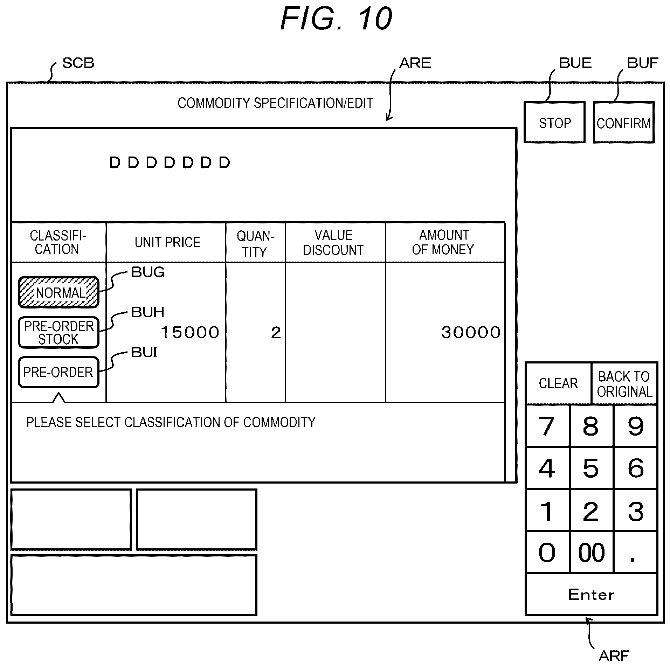

FIG. 10 is a diagram showing an example of an edit screen SCB.

FIG. 10 shows the edit screen SCB displayed in response to the tapping of the area in which the information related to the transaction commodity having the commodity name "DDDDDDD" is shown on the registration screen SCA in the state shown in FIG. 9.

The edit screen SCB includes areas ARE and ARF and buttons BUE and BUF. The area ARE shows character strings each indicating a respective one of a commodity name, a unit price, quantity, a value discount, and a total amount related to the selected transaction commodity, and an indicator indicating a delivery classification. The indicator includes buttons BUG, BUH, and BUI associated with normal delivery, delivery in stock, and delivery on order, respectively. In the example in FIG. 10, the indicator indicates that the normal delivery is set by highlighting the button BUG associated with the normal delivery with respect to the other buttons BUH and BUI. The buttons BUG, BUH and BUI are also soft keys for receiving designation of the delivery classification after the change. The area ARF represents a numeric keypad and some function keys. The button BUE is a soft key for receiving an instruction to stop changing various settings related to the selected transaction commodity. The button BUF is a soft key for receiving an instruction to confirm the changed settings related to the selected transaction commodity to the settings shown in the area ARE.

If the operator changes the delivery classification of the selected transaction commodity, the operator designates the changed delivery classification by tapping any one of the buttons BUG, BUH, and BUI. For example, if the operator wants to change the delivery classification of the transaction commodity having the commodity name "DDDDDDD" to delivery on order, the operator taps the button BUI on the edit screen SCB shown in FIG. 10.

After displaying the edit screen SCB in ACT 37 in FIG. 4, the processor 101 proceeds to ACT 38.

As ACT 38, the processor 101 checks whether the changed delivery classification is instructed. The processor 101 determines NO if not, and proceeds to ACT 39.

As ACT 39, the processor 101 checks whether confirmation of the change is instructed. The processor 101 determines NO if not, and proceeds to ACT 40.

As ACT 40, the processor 101 checks whether stop of the change is instructed. The processor 101 determines NO if not, and proceeds to ACT 41.

As ACT 41, the processor 101 checks whether an instruction other than the above is given. The processor 101 determines NO if not, and proceeds to ACT 38.

Thus, the processor 101 waits for the delivery classification, confirmation, stop, or other instructions, as ACT 38 to ACT 41. The processor 101 determines YES in ACT 38 if the delivery classification after the change has been instructed by the predetermined operation such as tapping any of the buttons BUG, BUH, and BUI, and proceeds to ACT 42.

As ACT 42, the processor 101 sets the instructed delivery classification as a candidate of the delivery classification related to the selected transaction commodity.

As ACT 43, the processor 101 updates the edit screen so as to highlight the candidate delivery classification. Then, the processor 101 returns the processing to a standby state in ACT 38 to ACT 41.

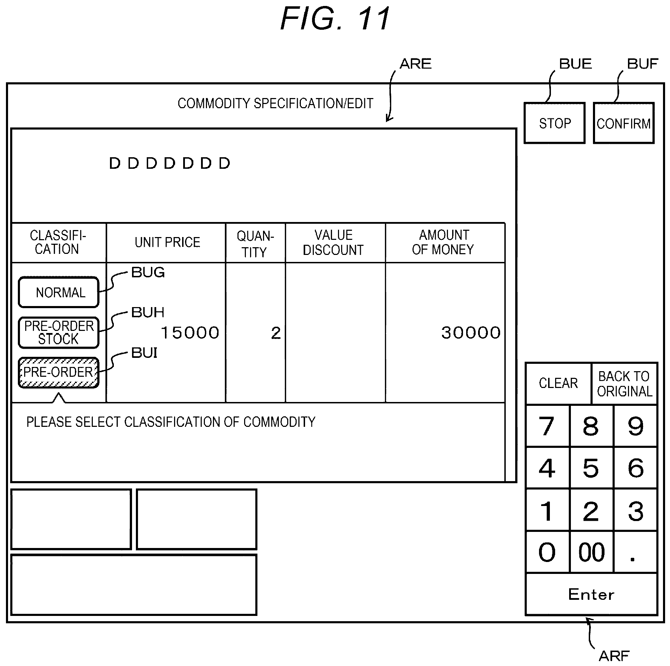

FIG. 11 is a diagram showing an example of the updated edit screen SCB.

The edit screen SCB shown in FIG. 11 is an example in which the edit screen SCB shown in FIG. 10 is displayed on the touch panel 104 and is updated in response to the fact that delivery on order is instructed as the delivery classification after the change by tapping the button BUI. Therefore, the button BUI is highlighted with respect to the other buttons BUG and BUH.

When the operator wants to change the setting other than the delivery classification related to the selected transaction commodity, the operator executes a predetermined operation for the instruction. For example, if the operator wants to change quantity, the operator taps a field in which the quantity is displayed on the edit screen SCB, and then operates the numeric keypad displayed in the area ARF to designate quantity after change. If such an operation has been executed, the processor 101 determines YES in ACT 41, confirms a content of the given instruction, and proceeds to processing according to the instruction. For example, the processor 101 confirms the operation, sets the quantity instructed by the operation as a candidate of the quantity after change, updates the edit screen SCB so as to represent the candidate of the quantity, and then returns to the standby state in ACT 38 to ACT 41. In the processing after it has been determined as YES in ACT 41, other processing or may also be executed, but the detailed description thereof will be omitted.

If the various settings displayed on the edit screen SCB have desired contents, the operator instructs the confirmation of the change by a predetermined operation such as tapping the button BUF. When this occurs, the processor 101 determines YES in ACT 39 and proceeds to ACT 44.

As ACT 44, the processor 101 updates the commodity data so as to reflect the various changes. For example, as in the specific example described above, if the transaction commodity having the commodity name "DDDDDDD" is selected and delivery on order is set as the transaction classification after the change from the normal delivery, the processor 101 updates the commodity data for the transaction commodity having the commodity name "DDDDDDD" to rewrite the classification code set in the field FBE to a classification code representing delivery on order. Then, the processor 101 proceeds to ACT 45.

Once the operator stops changing the settings related to the selected transaction commodity, the operator gives an instruction to end the changes by a predetermined operation such as tapping the button BUE. In response to such an operation, the processor 101 determines YES in ACT 40 and proceeds to ACT 45. As ACT 45, the processor 101 displays the registration screen SCA corresponding to the content of the transaction data DAA at this time on the touch panel 104. That is, if the processing proceeds to ACT 45 through ACT 44 according to the confirmation instruction, the processor 101 displays the registration screen SCA which is changed according to the update of the commodity data in ACT 44. If the processing passes ACT 44 and proceeds to ACT 45 according to the stop instruction, the processor 101 displays again the same registration screen SCA as that displayed before the edit screen is displayed in ACT 37. Then, the processor 101 returns to the standby state of ACT 14 to ACT 20 in FIG. 3.

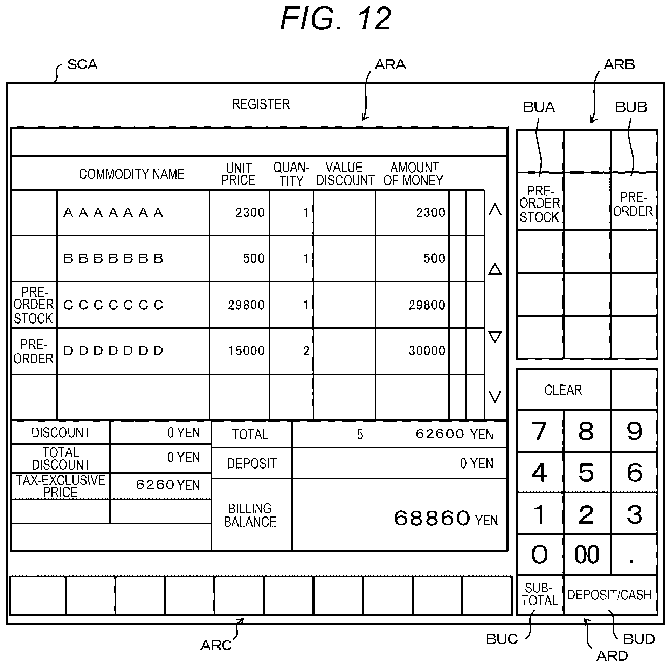

FIG. 12 is a diagram showing an example of the registration screen SCA.

FIG. 12 shows the registration screen SCA displayed in response to a confirmation instruction after the registration screen SCA shown in FIG. 8 was displayed on the touch panel 104 and after the edit screen SCB shown in FIGS. 10 and 11 was displayed.

Therefore, the registration screen SCA shown in FIG. 12 is changed from the registration screen SCA shown in FIG. 8 such that the character string "pre-order" for indicating that an item is registered as a delivery on order is now shown in association with the commodity having the commodity name "DDDDDDD".

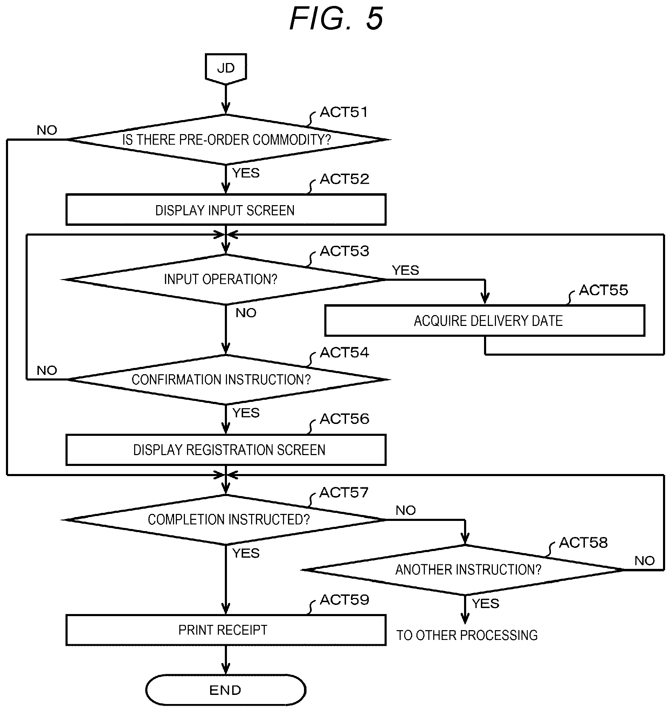

After completing the registration of the transaction commodity, the operator instructs a start of payment by a predetermined operation such as tapping the button BUC displayed on the registration screen SCA. Upon such instruction, the processor 101 determines YES in ACT 19 in FIG. 3 and proceeds to ACT 51 in FIG. 5.

As ACT 51, the processor 101 checks whether there is a pre-order commodity among the transaction commodities. A pre-order commodity is a commodity which can not be immediately delivered to the customer upon completion of the payment but will be delivered later. That is, a transaction commodity whose delivery classification is delivery in stock or delivery on order corresponds to a pre-order commodity. For example, if the commodity data set after the field FAC in the transaction data DAA includes at least one piece of commodity data in which the classification code for delivery in stock or delivery on order is set in the field FBE, the processor 101 determines that there is a pre-order commodity and determines YES, and proceeds to ACT 52.

As ACT 52, the processor 101 displays an input screen on the touch panel 104. The input screen is a GUI screen that receives an input of a scheduled date on which the pre-order commodity is delivered to the customer.

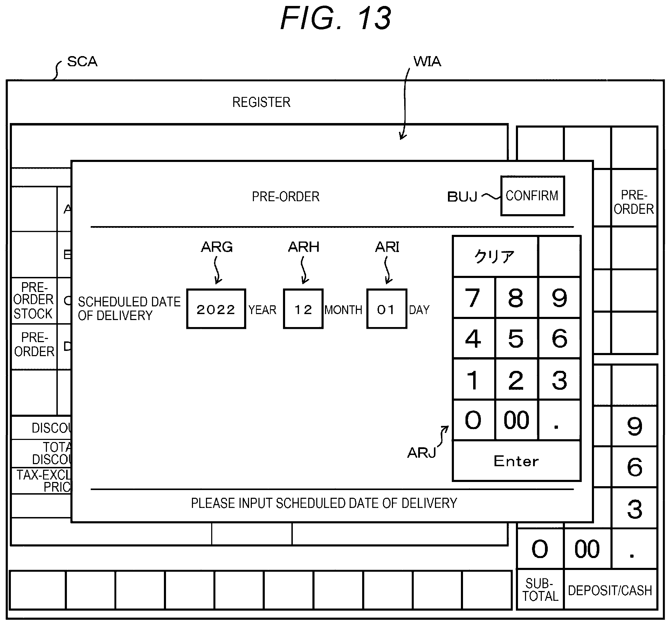

FIG. 13 is a diagram showing an example of an input screen SCC.

FIG. 13 shows the input screen SCC displayed in response to the button BUC being tapped on the registration screen SCA shown in FIG. 12. The input screen SCC shows a window WIA superimposed on the registration screen SCA shown in FIG. 12. The window WIA represents areas ARG, ARH, ARI, ARJ, and a button BUJ. The areas ARG, ARH, and ARI are input areas for inputting year, month, and day respectively as a scheduled date. The area ARJ represents a numeric keypad and some function keys. The button BUJ is a soft key for receiving an instruction to determine year, month, and day input to the areas ARG, ARH, and ARI as a scheduled date of delivery.

FIG. 13 shows a state in which numerical values have already been input in the areas ARG, ARH and ARI. In the input screen SCC displayed in ACT 52, the processor 101 initially sets the areas ARG, ARH, and ARI to blank states or other default values. In some examples, processor 101 may set numerical values representing year, month, and day according to some predetermined method in the areas ARG, ARH, and ARI on the input screen SCC displayed in ACT 52.

The operator inputs numerical values representing year, month, and day to the areas ARG, ARH, and ARI. What year, month, and day the operator inputs on the input screen SCC may be determined by the operator as appropriate. For example, when the pre-order commodity has a scheduled or estimated delivered date, the operator may check the scheduled date for delivery and inputs the date to the areas ARG, ARH, and ARI accordingly. If the customer desires to come to the store at a later date to pick up an item, the operator sets the areas ARG, ARH, and ARI as blank.

After displaying the input screen in ACT 52 in FIG. 5, the processor 101 proceeds to ACT 53.

As ACT 53, the processor 101 checks whether an input operation for inputting a scheduled date was executed. The processor 101 determines NO if not, and proceeds to ACT 54.

As ACT 54, the processor 101 checks whether a confirmation instruction is given. The processor 101 determines NO if not, and proceeds to ACT 53.

Thus, in ACT 53 and ACT 54, the processor 101 waits for an input operation or a confirmation instruction. If the numerical values representing year, month, and day to the areas ARG, ARH, and ARI have been input as described above, the processor 101 determines YES in ACT 53 and proceeds to ACT 55.

As ACT 55, the processor 101 appropriately changes the numerical values represented in the areas ARG, ARH, and ARI on the input screen SCC, and sets year, month, and day represented by the numerical values as a delivery date in the field FAB of the transaction data DAA. Then, the processor 101 returns to a standby state in ACT 53 and ACT 54. If ACT 55 is repeatedly executed due to another input operation, the processor 101 sets year, month, and day represented by newly input numerical values as the delivery date. Thus, by the processor 101 executing the transaction program PRA, a computer including the processor 101 functions as an update unit.

Thus, by the processor 101 executing transaction program PRA, a computer including the processor 101 functions as an input unit that inputs a scheduled date of delivery. By including the input scheduled date in the transaction data DAA, the processor 101 generates a list represented by the transaction data DAA such that the scheduled date of delivery for each pre-order commodity among the transaction commodities can be determined.

After the operator finishes inputting the year, month, and day as the delivery date, the operator instructs confirmation by a predetermined operation such as tapping the button BUJ. The operator may instruct confirmation when the areas ARG, ARH, and ARI are blank if, for example, the delivery date can not be determined. The processor 101 then determines YES in ACT 54 and proceeds to ACT 56.

As ACT 56, the processor 101 displays the registration screen SCA on the touch panel 104. That is, for example, the processor 101 returns the display of touch panel 104 to the registration screen SCA as displayed before the input screen SCC was displayed.

The operator settles prices of (received payment for) all registered transaction commodities by, for example, a cash settlement or any other settlement method such as credit card settlement. At this time, a settler appropriately uses the settlement unit 107. The processor 101 may notify the settlement unit 107 of the amount of money to be settled in response to a request from the settlement unit 107 in some examples. After the settlement is completed, the operator instructs the completion of the settlement by a predetermined operation such as tapping the button BUD displayed on the registration screen SCA.

After displaying the registration screen SCA in ACT 56, the processor 101 proceeds to ACT 57. For example, if the commodity data set after the field FAC in the transaction data DAA does not include at least one piece of commodity data in which the classification code of delivery in stock or delivery on order is in the field FBE, the processor 101 determines that there is no pre-order commodity and determines NO in ACT 51, bypasses ACT 52 to ACT 56, and proceeds to ACT 57.

As ACT 57, the processor 101 checks whether completion of settlement has been instructed. The processor 101 determines NO if not, and proceeds to ACT 58.

As ACT 58, the processor 101 checks whether any instruction other than the completion of the settlement has been given. The processor 101 determines NO if not, and proceeds to ACT 57.

Thus, the processor 101 waits for an instruction including a completion instruction in ACT 57 and ACT 58. If an instruction other than the completion instruction is given, the processor 101 determines YES in ACT 58, confirms a content of the given instruction, and proceeds to processing according to the instruction. For example, the processor 101 confirms that execution of settlement by a settlement method in which the settlement unit 107 needs to be used has been instructed, and operates the settlement unit 107 to execute settlement according to the instruction. For example, the processor 101 confirms that a predetermined operation for instructing registration of an additional transaction commodity has been executed, and executes ACT 31 and the subsequent ACTs in FIG. 4. Alternatively, the processor 101 confirms that an operation for instructing stop of the transaction has been executed, and then executes a stop/end operation such as deletion of the transaction data DAA, for example, and then ends the transaction processing. In the processing after it has been determined as YES in ACT 58, other processing may be executed, but the detailed description thereof will be omitted here.

After the operator executes the operation for instructing the completion of the settlement as described above, the processor 101 determines YES in ACT 57 and proceeds to ACT 59.

As ACT 59, the processor 101 causes the printer 108 to print a receipt representing the content of the transaction. Then, the processor 101 ends the transaction.

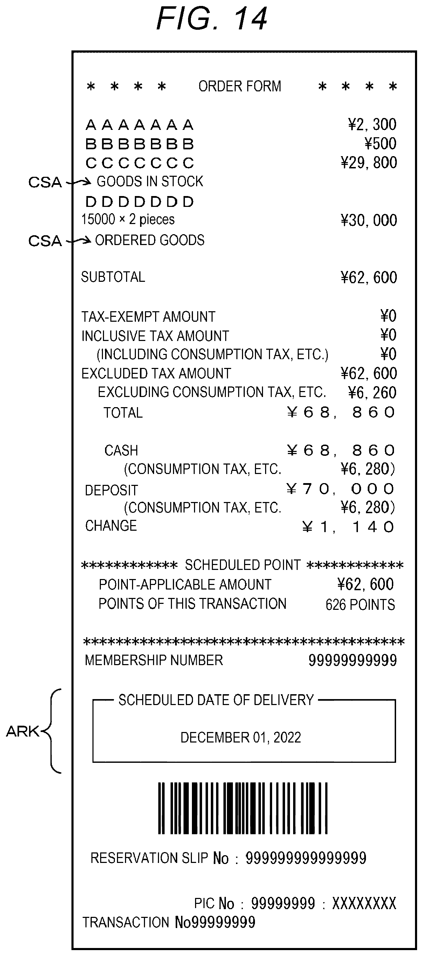

FIG. 14 is a diagram showing an example of a receipt.

The receipt shown in FIG. 14 is an example of a case in which the button BUC was tapped on the registration screen SCA in FIG. 12, the button BUJ was tapped on the input screen SCC in FIG. 13, and then the button BUD was tapped on the registration screen SCA at the end of the cash settlement.

The processor 101 includes a character string CSA of "goods in stock" on the receipt in order to represent that the transaction commodity having the commodity name of "CCCCCCC" is delivery in stock. The processor 101 includes a character string CSA of "ordered goods" on the receipt in order to represent that the transaction commodity having the commodity name of "DDDDDDD" is delivery on order. The processor 101 indicates that a delivery date is December 01, 2022 in an area ARK.

In some examples, processor 101 may execute aggregation of the transaction data for multiple transactions over a predetermined period of time or the like by use of the transaction program PRA or another information processing program. In such an aggregation process, the processor 101 may execute aggregation by each delivery classification, for example. That is, the processor 101 may obtain the total quantity of transaction commodities, the number of customers (transactions), and a total amount of money related to the transactions performed within an aggregation period in relation to each of the classifications normal delivery, delivery in stock, and delivery on order.

As described above, since the transaction device 100 includes the classification code in the commodity data in the transaction data DAA representing the list of the transaction commodities, it is possible to distinguish whether each of the transaction commodities is designated to be normal delivery, which is immediate delivery, or designated to be delivery in stock or delivery on order, which is later delivery. Accordingly, it is possible to process a batch transaction in which a commodity for immediate delivery and a commodity for later delivery are mixed.

The transaction device 100 can determine whether the later delivery is "delivery in stock" or "delivery on order" by differences in the classification code. Accordingly, it is possible to process a batch transaction in which a commodity to be in delivered later from stock and a commodity to be in delivered later after ordering are mixed.

If the commodity for which delivery in stock or delivery on order is designated is in the transaction, the transaction device 100 inputs a delivery date for the commodity, and includes the delivery date in the transaction data DAA. Accordingly, it possible to manage a scheduled date of delivery for a transaction commodity for later delivery.

The transaction device 100 determines the delivery classification for the newly designated transaction commodity before adding commodity data for the transaction commodity to the transaction data DAA, and then includes the classification code in the commodity data added to the transaction data. Accordingly, it is possible to prevent an omission in the setting of the delivery classification as compared with a case in which, upon receiving an instruction of the delivery classification for the registered transaction commodity, the commodity data related to the corresponding commodity is updated.

The transaction device 100 changes the delivery classification of the registered transaction commodity according to an operation by the operator. Accordingly, when the delivery classification cannot be properly set when registering a transaction commodity, the delivery classification can be easily corrected.

The present embodiment can be modified in various manners.

The delivery classification corresponding to a later delivery option may be only one of delivery in stock or delivery on order. Alternatively, the delivery classification corresponding to a later delivery may include a classification other than delivery in stock and delivery on order. As another classification, for example, a commodity in stock at another store in the same chain or the like as the transaction store may be delivered to the customer.

An initial registration mode may be the second registration mode or the third registration mode.

One of the registration modes may be set as a standard registration mode, and the registration mode may be returned to the standard registration mode every time a transaction commodity is registered in a mode other than the standard registration mode. For example, in an embodiment, the first registration mode may be set to the standard registration mode, and the first registration mode may be set when registration of a transaction commodity is completed in the second registration mode or the third registration mode. That is, the processor 101 returns to ACT 13 in FIG. 3 when ACT 36 in FIG. 4 is finished.

Every time a transaction commodity is registered, the designation of a delivery classification for the commodity may be received.

After the commodity is determined, an instruction of the delivery classification for the commodity may be received.

When a commodity is registered as a transaction commodity, a predetermined delivery classification may be set by default or the like, but the delivery classification for each registered transaction commodity may be appropriately changed according to an instruction by the operator.

Some or all of the functions implemented by the processor 101 by information processing may also or instead be implemented by hardware which executes information processing such as a logic circuit. The above-described functions may also be implemented by combining software control with the hardware such as a logic circuit or other dedicated circuits.

While certain embodiments have been described, the embodiments have been presented by way of examples only, and are not intended to limit the scope of the disclosure. The novel embodiments described herein may be embodied in a variety of other forms, and various omissions, substitutions and changes in the form of the embodiments described herein may be made without departing from the scope of the disclosure as defined by the appended claims. The accompanying claims and their equivalents are intended to cover such forms or modifications as would fall within the scope of the disclosure.

## Claims

1. A transaction processing device for batch transactions involving different product delivery modes, the device comprising:
a memory unit; and
a processor configured to:
receive a designation of a product to be in a sales transaction via a registration screen;
store the designation of the product as transaction data in the memory unit;
receive a designation of a commodity delivery type via an input screen for the designated product; and
generate a list of products in the stored transaction data of the memory unit with the products being distinguished by commodity delivery type.

2. The transaction processing device according to claim 1, further comprising:
a display screen, wherein
the generated list is displayed on the display screen.

3. The transaction processing device according to claim 1 or 2, further comprising:
a touch panel, wherein
the registration screen and the input screen are displayed on the touch panel.

4. The transaction processing device according to claim 3, wherein the generated list is displayed on the touch panel.

5. The transaction processing device according to any of claims 1 to 4, wherein the commodity delivery types include immediate delivery, delivery from stock, and delivery by order.

6. The transaction processing device according to any of claims 1 to 5, wherein the processor is configured to receive a delivery date input via the input screen for the designated product and store the delivery date input in the transaction data in association with the designated product.

7. The transaction processing device according to claim 6, wherein the processor is configured to populate fields for the delivery date input on the input screen with a predetermined delivery date.

8. The transaction processing device according to claim 6 or 7, wherein the generated list includes the delivery date input for the products.

9. The transaction processing device according to any of claims 1 to 8, wherein the processor is further configured to update the list each time a designation of another product is received via the registration screen but only after receiving a designation of a commodity delivery type via the input screen for the other product.

10. The transaction processing device according to any of claims 1 to 9, wherein the processor is further configured to update the list according to a change instruction received via an edit screen for the designated product, the change instruction changing the commodity delivery type for the designated product.

11. A non-transitory, computer-readable medium storing program instructions which when executed by a transaction processing device causes the device to perform a method comprising:
receiving a designation of a product to be in a sales transaction via a registration screen;
storing the designation of the product as transaction data in a memory unit;
receiving a designation of a commodity delivery type via an input screen for the designated product; and
generating a list of products in the stored transaction data of the memory unit with the products being distinguished by commodity delivery type.

12. The non-transitory, computer-readable medium according to claim 11, wherein the generated list is displayed on a display screen.

13. The non-transitory, computer-readable medium according to claim 11 or 12, wherein the registration screen and the input screen are displayed on a touch panel display.

14. The non-transitory, computer-readable medium according to claim 13, wherein the generated list is displayed on the touch panel display.

15. The non-transitory, computer-readable medium according to any of claims 11 to 14, wherein the commodity delivery types include immediate delivery, delivery from stock, and delivery by order.
